Europäisches Patentamt

European Patent Office

Office européen des brevets

(19)

(11) Publication number: **0 289 242**
**A2**

## (12) EUROPEAN PATENT APPLICATION

(21) Application number: 88303688.1

(22) Date of filing: 25.04.88

(51) Int. Cl.4: **C08K 3/22** , **B29C 37/00** ,
**B29C 67/14**

(30) Priority: 26.04.87 ZA 871800

(43) Date of publication of application:
**02.11.88 Bulletin 88/44**

(84) Designated Contracting States:
**AT BE CH DE ES FR GB GR IT LI LU NL SE**

(71) Applicant: **MINERAL ENGINEERING
TECHNOLOGY (PROPRIETARY) LIMITED
62 Barney Road
Benrose Transvaal(ZA)**

(72) Inventor: **Deschamps, John Alexander
16 Pickwood Road
Irene Transvaal(ZA)**

(74) Representative: **Kyle, Diana et al
ELKINGTON AND FIFE High Holborn House
52/54 High Holborn
London WC1V 6SH(GB)**

(54) **Wear resistant surfaces.**

(57) A wear resistant surface for material handling equipment such as separating spirals and the like made of Glass Reinforced Plastics which comprises alumina in finely divided particulate form contained in a matrix of a synthetic resinous material such as an epoxy, and/or polyester, and/or polyurethane and the like.

EP 0 289 242 A2

## WEAR RESISTANT SURFACES.

THIS invention relates to wear resistant surfaces and to a method of providing such a surface on the operative face of material handling equipment and the like.

Wear resistant surfaces, and then particularly abrasive resistant surfaces, play an important rôle in mining and related industries where they are, for example, utilised as the operative faces of material handling equipment.

Because of the abrasive nature of the material which usually has to be handled by such equipment, those surfaces over which the material has to pass are continuously subjected to severe erosive actions, often resulting in the equipment breaking down. Apart from the fact that it is relatively time consuming and expensive to repair such equipment, the equipment is also out of action while such repairs are effected thereto, and severe losses can hence be suffered as a result of such "down time".

It is known to protect the operative surfaces of material handling equipment with a layer of material which has better wear resistant properties than the material of the equipment itself, and substances such as polyurethane and alumina (a form of aluminium oxide) have found wide application in this regard.

Furthermore, a substance such as glass reinforced plastics (GRP hereafter), which is commonly referred to in the trade as glass fibre or fibre glass, has, for various reasons, become very popular as the material from which such equipment is made. The GRP surface of such equipment itself is usually not completely suited to serve as operative surface for the equipment, and it has been suggested to coat such a surface with a layer of a protective material.

However, in applicant's experience, all the arrangements which have hitherto been suggested in this regard suffer from some disadvantage or another.

It is accordingly an object of this invention to provide an arrangement with which the aforesaid problem may be overcome or at least minimised.

According to the invention a wear resistant surface for material handling equipment is provided which includes alumina in finely divided particulate form in a matrix of a suitable synthetic resinous material.

Applicant has found that such a surface has excellent wear resistant, particularly abrasive resistant, properties, and that it can be provided on such equipment in a relatively simple manner.

The alumina particles which are used are preferably of a size smaller than 2mm, and they can be of uniform size or, graded.

Preferably, the alumina comprises a mixture of a sintered powder such as, for example, that available under the trade name Abromax (proprietor - Lonza), and ordinary alumina powder of the type which is commercially available on the market.

The synthetic resinous material can be any suitable one, and can, for example, comprise a suitable polyester and/or epoxy type resin, polyurethane, etc.

Preferably the material onto which the surface has to be provided comprises GRP.

Where the surface which has to be protected comprises GRP, a suitable alumina based resin may be utilised together with the aforesaid alumina substrate.

In a preferred form of the invention the surface according to the invention is intended for use on a material separating spiral which is made of GRP.

In a method for providing a wear resistant surface according to the invention on equipment made of GRP, the mould in which the particular piece of equipment has to be formed is cleaned and polished, and a mixture of Abromax, powdered alumina and a suitable polyester and/or epoxy type resin, together with a catalyst, painted or sprayed onto the operative face of the mould. The mixture is then allowed to solidify over a period of time - usually between 15 and 20 minutes.

The glass fibre and its conventionally associated components required for forming a GRP are then layed in conventional manner in the mould, and allowed to set.

It will be appreciated that the method according to the invention is relatively speaking so simple to carry out, that it can be performed by substantially unskilled labour.

Applicant has furthermore found that a protective surface according to the invention has wear resistant, particularly abrasive resistant, properties which far outstrip those of any of the hitherto known arrangements.

It will be appreciated further that the invention also includes within its scope a piece of equipment, particularly one made of GRP, provided with a wear resistant surface by the method of the invention.

In a preferred form of the invention such piece of equipment comprises a material separating spiral or the like.

It will be appreciated still further that there are no doubt many variations in detail possible with a surface according to the invention, and the method by means of which it can be provided on a piece of equipment, without departing from the spirit and/or

3       0 289 242       4

scope of the appended claims.

## Claims

1. A wear resistant surface for material handling equipment which includes alumina in finely divided particulate form in a matrix of a suitable synthetic resinous material.

2. The surface of claim 1 wherein the alumina particles are of a size smaller than 2mm.

3. The surface of claim 2 wherein the alumina particles are of uniform size, or graded.

4. The surface of any one of the preceding claims wherein the alumina comprises a mixture of a sintered powder such as that of the type known under the trade name Abromax and ordinary alumina powder of the type which is usually commercially available on the market.

5. The surface of any one of the preceding claims wherein the synthetic resinous material comprises a suitable polyester and/or epoxy type resin and/or polyurethane.

6. The surface of any one of the preceding claims provided on a body of GRP.

7. The surface of claim 6 wherein a suitable alumina based resin is utilised together with the alumina substrate.

8. The surface of any one of the preceding claims for use on a material separating spiral which is made of GRP.

9. A material separating spiral of which the operative face includes a surface as claimed in any one of the preceding claims.

10. A method for providing the wear resistant surface of any one of claims 1 to 8 on equipment made of GRP, including the steps of applying to the operative face of the mould in which the particular piece of equipment has to be formed a mixture of Abromax, powdered alumina and a suitable polyester and/or epoxy type resin and a suitable catalyst, and allowing the mixture to solidify; laying a layer of glass fibre and its conventionally associated components required for forming a GRP in the mould; and allowing the GRP to set.

11. The method of claim 10 wherein the operative surface of the mould is cleaned and polished prior to applying the alumina substrate thereto.

12. The method of claims 10 or 11 wherein the equipment comprises a material separating spiral.

3